Europäisches Patentamt

(19) European Patent Office (11) Numéro de publication: **0 074 289**
**B1**
Office européen des brevets

(12) **FASCICULE DE BREVET EUROPEEN**

(45) Date de publication du fascicule du brevet: (51) Int. Cl.⁴: **H 01 H 35/02**
**06.11.85**

(21) Numéro de dépôt: **82401392.4**

(22) Date de dépôt: **27.07.82**

(54) **Levier de commande pour jeux électroniques.**

(30) Priorité: **07.08.81 FR 8115364**

(43) Date de publication de la demande:
**16.03.83 Bulletin 83/11**

(45) Mention de la délivrance du brevet:
**06.11.85 Bulletin 85/45**

(84) Etats contractants désignés:
**DE GB IT**

(56) Documents cités:
**DE - A - 2 320 974**
**FR - A - 1 003 121**
**FR - A - 1 390 318**
**FR - A - 2 339 947**
**GB - A - 911 151**
**GB - A - 1 048 121**
**US - A - 1 908 430**
**US - A - 3 018 750**

(73) Titulaire: **SOCIETE D'ELECTRONIQUE INDUSTRIELLE de MOULINS - SELIMO, 173, bld Haussmann, F-75379 Paris Cédex 08 (FR)**

(72) Inventeur: **Henrard, José, THOMSON-CSF SCPI 173, bld Haussmann, F-75379 Paris Cedex 08 (FR)**
Inventeur: **Jaquemin, Marie Noelle, THOMSON-CSF SCPI 173, bld Haussmann, F-75379 Paris Cedex 08 (FR)**
Inventeur: **Leduc, Michel, THOMSON-CSF SCPI 173, bld Haussmann, F-75379 Paris Cedex 08 (FR)**

(74) Mandataire: **Thrierr, Françoise et al, THOMSON-CSF SCPI 173, Bld Haussmann, F-75379 Paris Cedex 08 (FR)**

## Description

La présente invention a pour objet un dispositif de commande pour jeux électroniques dénommé manette de jeu. Un tel dispositif convertit au moins une position en informations électriques, sous l'action d'au moins un élément mobile susceptible d'influer sur au moins un détecteur, et est utilisé dans le domaine des jeux électroniques sur écran, pour commander le déplacement d'un point de référence sur un écran.

On connaît déjà un dispositif de commande comportant un levier qui est rappelé par ressort vers une position de repos et qui actionne une série de contacts disposés dans un boîtier. L'utilisateur est de ce fait obligé de tenir le boîtier dans une main et d'actionner le levier avec l'autre main. Le dispositif comporte en outre en général un interrupteur manuel qui est disposé sur le boîtier et qui est actionné par le pouce de la main qui tient le boîtier.

La présente invention a pour abjet un dispositif de commande qui puisse être entièrement utilisé avec une seule main.

Dans le document FR-A-2 999 947 on décrit un dispositif qui utilise la gravité pour mouvoir un pendule dans une boîte pendante. L'ordre fourni par le boîtier est validé par un bouton poussoir. L'invention permet d'éviter le recours à un bouton de validation.

Le document US-A-3 018 750 décrit, de façon détaillée, un interrupteur à mercure destiné à être inséré dans une manette d'un dispositif de commande à distance.

L'interrupteur comporte une chambre contenant une certaine quantité de mercure, faisant fonction de contact mobile, et une pluralité de contacts électriques fixes.

L'agencement de l'interrupteur dans la manette est tel que, lors d'une modification de l'orientation de la manette dans au moins un plan donné, et/ou d'un movement relatif par inertie lors du déplacement de la manette dans au moins un plan donné, le mercure effectue une connexion avec l'un des contacts fixes, en convertissant ainsi un signal de position en un signal électrique correspondant.

La position de repos d'un tel dispositif doit être garantie en introduisant la manette dans un support.

L'invention concerne un dispositif, denommé manette de jeu, pour commander le déplacement d'un point de référence sur un écran d'un jeu électronique, ledit dispositif comportant un boîtier contenant au moins un élément mobile susceptible de coopérer avec au moins un détecteur, caractérisé en ce que ledit boîtier comporte une paroi pourvu d'un méplat pour permettre la pose dudit boîtier sur un support dans une position de repos du dispositif, et en ce que ledit élément mobile et ledit détecteur sont réalisés de telle sorte qu'ils sont animés d'un mouvement relatif sous l'action de la gravité lors d'une modification de l'orientation du boîtier dans au moins un plan donné, et/ou d'un mouvement relatif par inertie lors du déplacement du boîtier dans au moins un plan donné.

Selon un mode de réalisation, un élément mobile est un pendule qui, selon un mode particulier est susceptible d'influer sur plus d'un détecteur.

Selon un autre mode de réalisation, un élément mobile est constitué par un objet se déplaçant par roulement entre une position de repos et une position où il influe sur au moins un détecteur. Ce peut être une bille pouvant se déplacer dans au moins une rainure de préférence inclinée ou sur un tronc de cône, la position de repos étant consituée par un méplat ou une butée.

Selon un autre mode de réalisation, un élément mobile est constitué par un liquide, par exemple le mercure d'une ampoule à mercure, de préférence inclinée d'un angle donné lorsque le dispositif est dans une position dite de repos. Une ampoule unique peut comporter une pluralité de détecteurs correspondant chacun à une direction d'inclination privilégiée de l'ampoule.

Un détecteur peut être un contact électrique bilame ou un contact électrique simple, ou bien un contact magnétique ou opto-électronique.

Selon une caractéristique essentielle de l'invention, le dispositif comporte un boîtier dont la paroi inférieure est pourvue d'un méplat correspondant à une position de repos du dispositif. Par exemple, il comporte une face inférieure pourvue d'un méplat central entouré d'une portion arrondie et une face supérieure également de forme générale arrondie, de manière à définir un dispositif de forme générale aplatie.

Un dispositif selon l'invention peut être de forme générale cylindrique et présenter au moins une face supérieure incliné par rapport au plan normal aux génératrices du cylindre.

Un dispositif selon l'invention peut être associé à un support coopérant avec la partie inférieure dudit dispositif, de manière à assurer un rappel élastique vers sa position de repos. Un dispositif selon l'invention peut être associé ainsi à un support pourvu d'un replis élastique, ou bien formant ventouse, ou bien encore à une rotule.

L'invention sera mieux comprise à la lecture de la description qui va suivre donnée à titre d'exemple non limitatif en se reportant aux dessins où:

les figures 1a à 1d, 2a, 2b et 3 représentent des modes de réalisation d'une première variante de l'invention,

les figures 4, 5a, 5b, 6 à 13 représentent des modes de réalisation d'une deuxième variante de l'invention,

les figures 14 et 15a à 15d représentent des modes de réalisation d'une troisième variante de l'invention,

les figures 16a, 16b, 17a, 17b, 18a, 18b, 19 et 20 représentent des dispositifs selon l'invention utilisables préférentiellement avec un support.

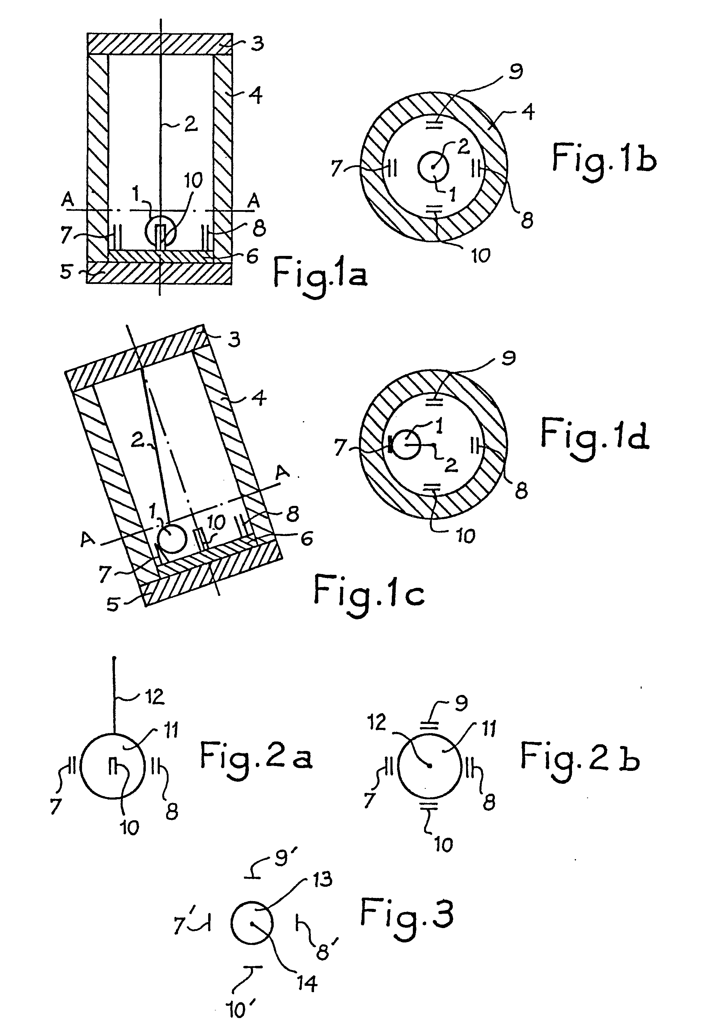

Le dispositif de commande de la fig. 1a (en coupe par un plan vertical) comporte un pendule 1 suspendu par un fil 2, de préférence semi-rigide ou rigide, à un couvercle 3 disposé sur un boîtier généralement cylindrique 4, destiné à être tenu par la main de l'utilisateur.

A la partie inférieure du corps 4, est disposé un fond 5 supportant un circuit imprimé 6 portant des contacts bi-lame 7 à 10 ainsi que des liaisons conductrices (voir également la fig. 1b qui est une coupe de la fig. 1a par le plan AA). Les figures 1a et 1b représentent le dispositif en position de repos où son axe est vertical, alors que les figures 1c et 1d montrent, également en coupe, le même dispositif, en position inclinée dans le plan de coupe de la fig. 1a. Le contact bi-lame 7 est fermé par le pendule 1, étant donné que l'inclinaison du corps 4 a provoqué un mouvement relatif entre le pendule et le contact 7. Le pendule 1 est de ce fait un élément mobile par rapport aux contacts 7 à 10. Il constitue également un élément mobile en tant que tel: en effet, si on incline le boîtier 4 d'un angle juste nécessaire à la fermeture du contact 7, le fil 2 du pendule 1 va rester d'axe vertical. Par contre, si l'inclinaison du boîtier 4 est poursuivie de manière à augmenter cet angle, le pendule 1 va se trouver retenu par la butée que constitue le contact 7 et par conséquent, le fil 2 va voir son axe s'incliner à son tour.

La fermeture d'un contact tel que 7 peut également être obtenue en soumettant le boîtier 4 à un déplacement brusque dans le plan horizontal, le contact se fermant grâce à l'inertie du pendule.

Les figures 1a à 1d montrent une configuration où un pendule 1 de faible diamètre est suspendu à un fil 2 relativement long. Dans ces conditions, un seul des 4 contacts 7 à 10 peut être fermé à la fois, ce qui nuit à la précision sauf à augmenter le nombre des contacts. Les figures 2a et 2b montrent ainsi, respectivement en vue latérale et de dessus, un mode fe réalisation où un pendule 11 de diamètre relativement important est suspendu à un fil 12, qui peut être ou non relativement court. Cette disposition permet au pendule 11 de fermer un ou deux contacts, suivant la direction où on l'incline, ce qui permet en pratique de localiser 8 directions principales avec 4 contacts, et donc de visualiser sur un écran des déplacements horizontaux, verticaux et diagonaux. De plus, la course du pendule étant réduite, la réponse du dispositif est plus rapide, que le fonctionnement ait lieu par inclinaison ou par inertie, et on risque moins d'être gêné par des rebonds.

La fig. 3 représente en vue de dessus un monde de réalisation où les contacts 7' à 10' sont des lames simples. Dans ce cas, le pendule 13 et son fil 14 sont conducteurs de manière à constituer un deuxième pôle de contact électrique.

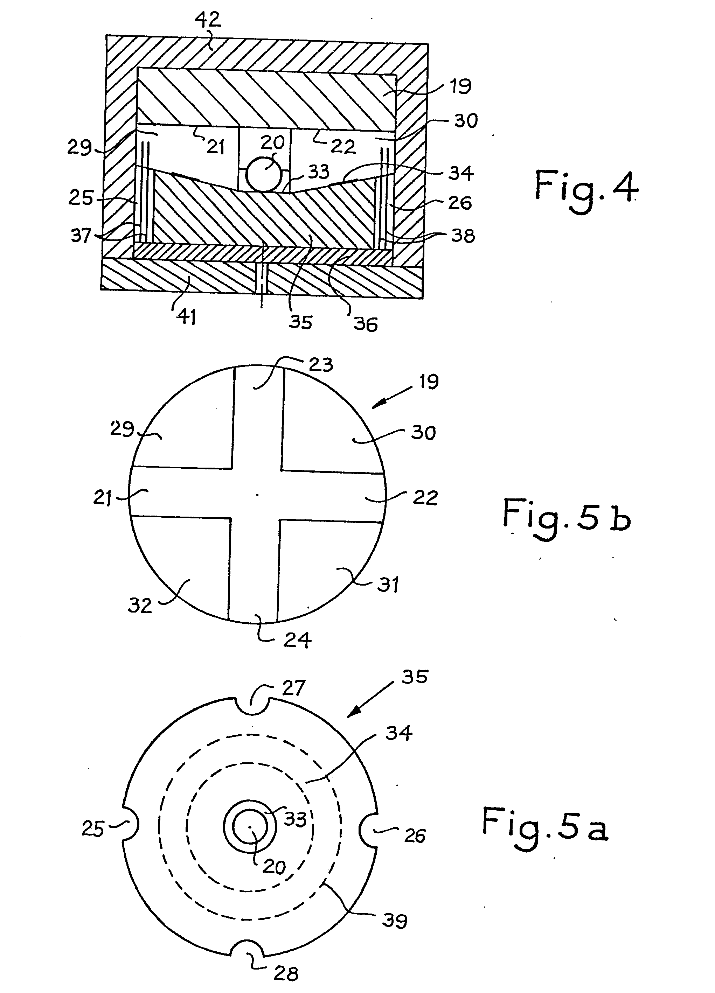

La fig. 4 représente en coupe verticale une variante où l'élément mobile est constitué par au moins une bille 20. Un boîtier 42 comportant une partie supérieure formant couvercle et une partie latérale cylindrique est associé à un fond 41. Le fond 41 porte un circuit imprimé 36 sur lequel sont disposé 4 éléments destinés à détecter la présence de la bille 20, par exemple 4 contacts bi-lames dont deux, 37 et 38 sont visibles sur la fig. 4. La ou les billes 20 roulent sur un tronc de cône 34 disposé à la partie supérieure d'un support 35 généralement cylindrique et sa position de repos est matérialisée par un méplat 33 disposé du côté du sommet du cône.

La fig. 5a montre le support 35 vu de dessus et on s'y reportera également. Le support 35 est de forme généralement cylindrique, sa partie inférieure au moins partiellement plate étant en contact avec le circuit imprimé 36. Il porte 4 saignées 25 à 28 parallèles à son axe qui est celui du tronc de cône 34 pour laisser passer les contacts. Le mouvement de la bille 20 est canalisé latéralement le long de canaux 21 à 24 d'une pièce de maintien 19 qui est représentée en vue de dessous à la fig. 5b. Les bords des canaux 21 à 24 sont constitués par quatre profils 29 à 32 formant un tronc de cône hypothétique dont la matérialisation est interrompue par les canaux 21 à 24, et qui est complémentaire du tronc de cône 34. Par conséquent lorsque l'ensemble est monté, les profils 29 à 32 viennent en butée sur le tronc de cône 34 et les contacts bi-lames dépassent des saignées 25 à 28 du support 35 de telle sorte que l'un au moins d'entre eux puisse être fermé par la bille lorsque l'inclinaison du boîtier 42 est suffisante. Il est possible de remplacer les contacts bi-lames par des contacts électriques simples par exemple une lame. Dans ce cas, la bille est conductrice et est susceptible de rouler sur une piste conductrice constituant un deuxième pôle de contact, au moins lorsque la bille est en contact avec un contact simple. A cet effet, on a représenté une couronne conductrice 34 aux figures 4 et 5a.

Un dispositif à bille se prête également à un fonctionnement par inertie, par déplacement brusque dans le plan horizontal.

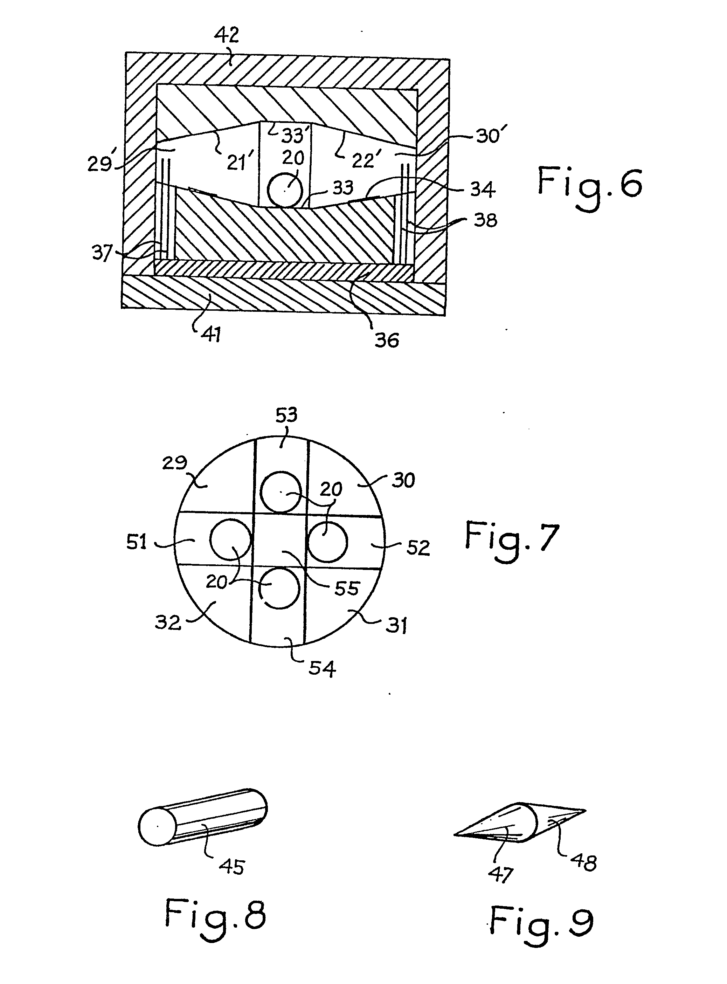

La fig. 6 représente, également en coupe verticale, une version modifiée de la fig. 4 ou les canaux 21 à 24 sont également inclinés avec le même angle d'ouverture que le tronc de cône 34 ou avec un angle différent et se prolongent par un méplat central 33' de telle sorte que le dispositif peut être indifféremment utilisé dans une position dite normale ou dans une position retournée.

La fig. 7 représente, en vue de dessous, une version modifiée de la pièce 19 de la fig. 4 (ou de sa contrepartie dans la fig. 6) où quatre billes 20 sont disposées chacune dans un canal 51 à 54, les differents canaux étant séparés par un plot central 55 formant butée. A titre de variante, cette pièce est utilisée sans pièce telle que 35 avec la butée 55 dirigée vers le haut, les canaux 51 à 54 étant de préférence inclinés.

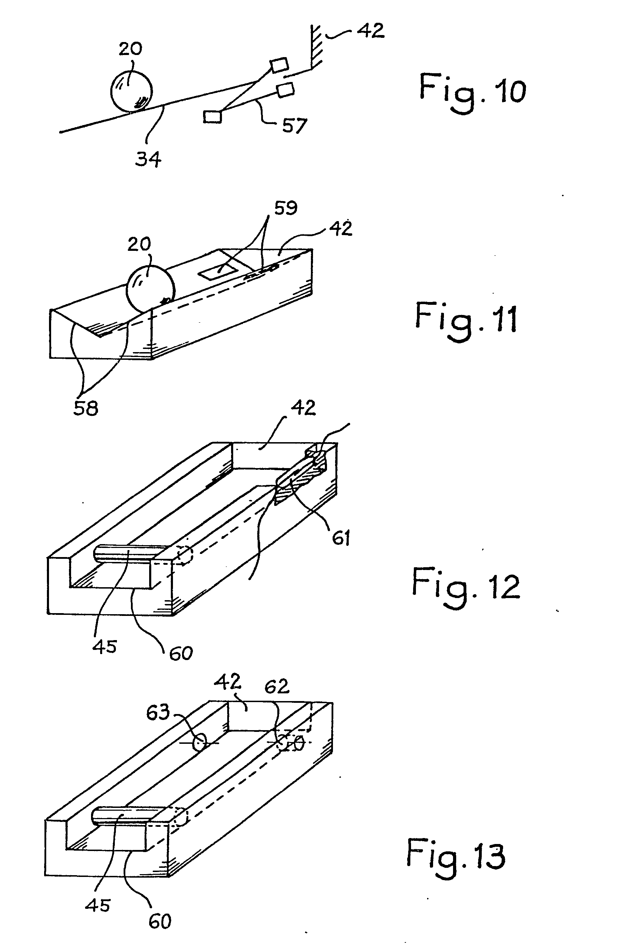

La ou les billes 20 peuvent être remplacées par d'autres objets se déplaçant par roulement, par exemple un cylindre 45 (fig.8) ou deux cônes 47, 48 mis bout à bout (fig. 9).

D'autre part, l'angle d'inclinaison éventuel des canaux par rapport à l'horizontale doit être limité de manière à ne pas imposer une inclinaison trop importante du boîtier afin d'éviter des mouvements trop amples et des rebonds trop importants. Si l'angle est trop petit, la sensibilité du dispositif risque d'être trop grande et par conséquent son utilisation demander une attention trop grande. En pratique, un angle d'inclination de l'ordre de 10° donne satisfaction.

D'autre part (voir la coupe de la fig. 10), la détection de position peut se faire au niveau de la partie inférieure du guide sur lequel roule la bille 20 (par exemple grâce à des bi-lames 57) ou bien latéralement (voir la vue en perpective fig. 11), et dans ce cas, le guide 58 de roulement a de préférence un profil en V si une bille est utilisée. On a représenté deux contacts conducteurs 59, fermés par la venue en butée de la bille 20 en matériau conducteur.

A la fig. 12, également en perpective, un rouleau 45 aimanté disposé dans une rainure 60 formant guide voit sa venue en butée détectée par un contact magnétique 61 constitué par un interrupteur à lame souple.

A la fig. 13, également en perspective, la détection est effectué par un couple émetteur-récepteur opto-électronique, par interruption du faisceau lumineux.

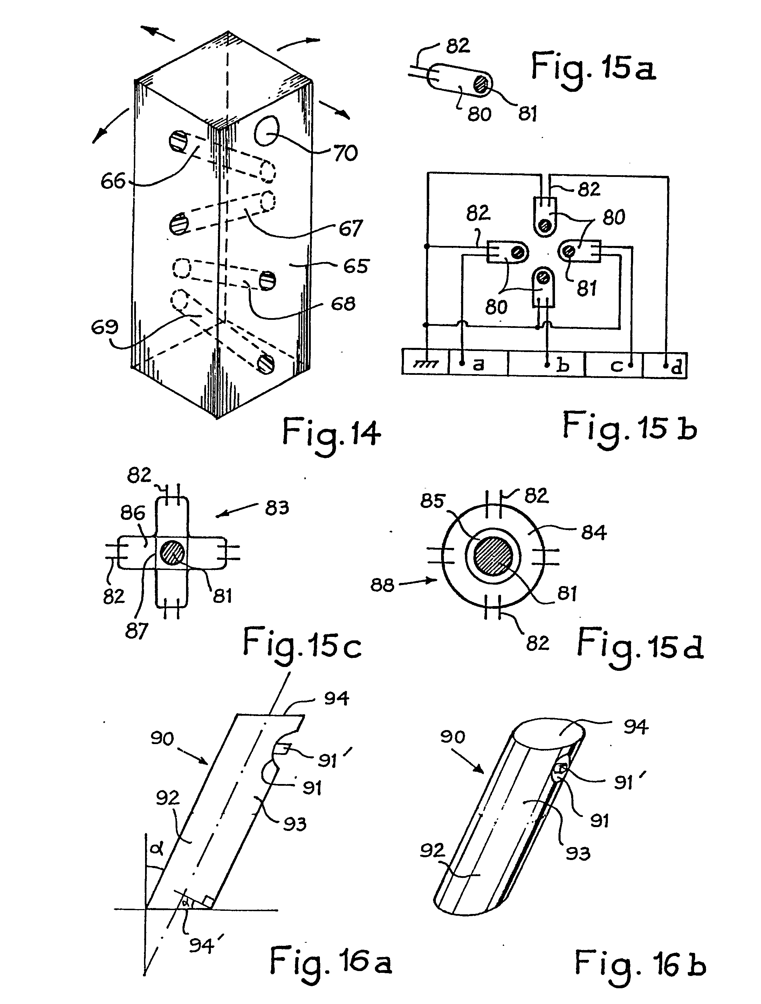

La fig. 14 représente en perspective une variante de l'invention permettant de minimiser la dimension latérale du dispositif de manière que celui-ci puisse être saisi facilement dans la paume de la main. Pour ce faire, les différents détecteurs sont superposés. Le dispositif 65 est pourvu de quatre alésages inclinés 66 à 69, borgnes ou débouchants, disposés dans les quatres directions correspondant à celle des quatre guides décrits plus haut. Ces alésages sont aménagés pour recevoir des dispositifs individuels à bille, rouleaux, etc... décrits ci-dessus ou bien encore, des dispositifs tels que des ampoules à mercure. Une ampoule à mercure est représentée à la fig. 15a et comporte une ampoule de verre 80, et deux contacts 82 qui peuvent être court-circuités par une bille de mercure 81. Le court-circuit peut être obtenu par inclinaison convenable de l'ampoule 80, ou bien encore par inertie en soumettant l'ampoule à un brusque mouvement axial.

Un tel dispositif est susceptible de fonctionner par inclinaison dans les quatre directions indiquées plus haut, avec fermeture d'un contact ou dans des directions intermédiaires avec fermeture de deux contacts simultanément. Il peut également fonctionner par inertie, par déplacement brusque dans le plan horizontal. Un interrupteur 70 est en outre prévu à l'extrémité supérieure d'une des faces de manière à constituer par exemple une commande de tir pour des jeux consistant en la réalisation d'opérations militaires.

La fig. 15b représente un schéma d'assemblage de 4 ampoules à mercure pourvues chacune d'une ampoule de verre 80, d'une bille de mercure 81 et d'un contact 82. Ces ampoules sont de préférence inclinée dans des directions convergentes, de manière à définir quatre directions de déplacement inclinées pour les billes de mercure 81, de manière analogue au cas de la fig. 7. Un des pôles de chaque contact 82 de chaque ampoule constitue un point commun (ou masse), l'autre pôle constituant un pôle actif, respectivement a, b, c et d, destiné à la détection des court-circuits des contacts 82. Un assemblage de 4 ampoules de la fig. 15b se prête particulièrement bien à une realisation sous forme superposée. Dans le cas de la fig. 14, chaque alésage, 66 à 69, reçoit une ampoule de mercure.

La fig. 15c représente en vue de dessus, un mode de réalisation où une ampoule unique 83 comporte 4 branches 86, de préférence inclinées, dont chacune comporte un contact 82, et une bille de mercure unique reposant sur un méplat 87.

La fig. 15d est un mode de réalisation où une ampoule unique 88 présente une partie conique 84, ainsi qu'un méplat 85, et une pluralité (ici 4) de contacts 82 répartis. Les dimensions relatives peuvent être choisis telles que la bille ferme un ou deux contracts.

Selon la vue latérale de la figure 16a, et la vue de dessus correspondant 16b, un dispisitif perfectionné 90 destiné à être tenu dans la paume de la main présente au moins une de ses faces supérieure et inférieure 94 et 94' inclinée d'un angle $\alpha$ par rapport au plan normal aux génératrices du cilindre définissant la manette de jeux. Ainsi, lorsque le dispositif est tenu en main en position de repos, les faces 94 et 94' étant horizontales, l'axe longitudinal de celui-ci fait un angle $\alpha$ avec la verticale. Cette angle est choisi approximativement égal à 20° ou 25°, ce qui correspond approximativement au décalage vers l'avant du logement que définit la paume de la main fermée lorsque l'avant-bras est horizontal et le poignet en position normale. Dans ces conditions, le repérage de la position de repos de la manette est facilité puisque celle-ci correspond naturellement à la position de repos de la main. La fig. 16b montre mieux la section du dispositif. Il comporte une partie avant de forme arrondie 93 favorisant la prise en main. A l'extrémité la plus avancée vers l'avant, c'est-à-dire celle où l'angle entre les génératrices de la partie avant et le plan 94 est le plus petit, la partie avant 93 porte un décrochement 91 où est logé un interrupteur 91'. La partie arrière et les parois latérales 92 peuvent être de forme généralement arrondie. La face inférieure 94' est réalisée de telle manière que le dispositif puisse être posé sur celle-ci sans tomber.

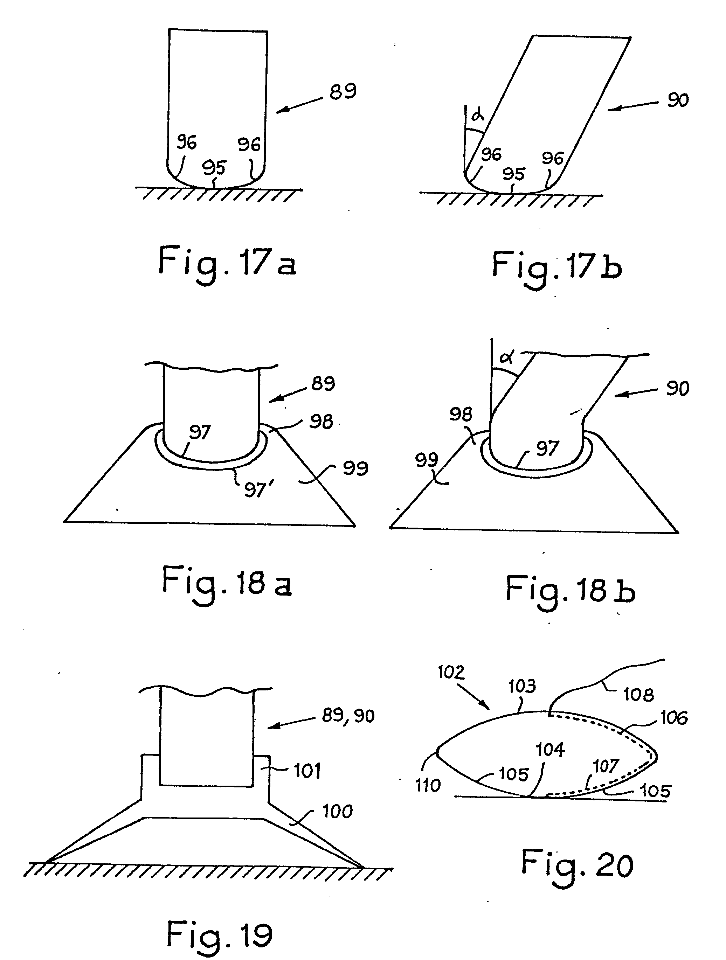

La fig. 17a représente en vue latérale un dispositif 89 qui peut être posé sur un support (table, accoudoir, etc....) et présente à cet effet à sa partie inférieure un méplat 95 entouré d'une portion arrondie 96. Lorsque le méplat 95 du dispositif 89 est posé sur un support horizontal, celui-ci est en position de repos. Il peut être incliné dans toutes les directions par roulement sur la portion arrondie 96. La position de repos peut être retrouvée à tout instant grâce au méplat 95. Cette réalisation peut bien entendu (voir fig. 17b) s'appliquer à un dispositif 90 incliné d'un angle $\alpha$ vers l'avant.

Selon la coupe de la fig. 18a, un dispositif 89 est inséré dans un replis élastique 98 d'un support 99. Sa partie inférieure 97 est de préférence au moins en partie arrondie de manière à permettre la rotation à la manière d'une rotule dans un évidement 97' correspondant du support 99. Le repli élastique 98 assure un rappel élastique du dispositif dans la position de repos. A la figure 18b, cette réalisation est mise en oeuvre dans le cas d'un dispositif 90 incliné d'un angle $\alpha$ vers l'avant.

Selon une variante non représentée, la partie d'un dispositif selon l'invention peut coopérer avec une rotule qui est rappelée, de manière connue en soi, vers sa position d'équilibre, par une membrane élastique.

La fig. 19 montre en coupe un dispositif 89, 90 qui peut être ou non incliné d'un angle $\alpha$ vers l'avant associé à un support 100 formant ventouse. Il est maintenu solidaire de la ventouse 100, par exemple par emmanchement légèrement serré dans une portion cylindrique 101. La ventouse 100 est fixée par pression sur un support horizontal et exerce grâce à son élasticité une force de rappel du dispositif vers sa position d'équilibre.

La fig. 20 montre en vue latérale un dispositif 102 de forme généralement aplatie et qui peut être réalisé avec les différents types de détecteurs et d'éléments mobiles décrits ci-dessus. Il comporte une face inférieure pourvue d'un méplat central 104 entouré d'une portion arrondie 105. La face supérieure 103 est également de forme arrondie. La surface 110 de raccordement entre les faces supérieure et inférieure correspond approximativement au raccordement de deux portions de sphère. La sortie de fil a lieu au sommet de la face supérieure 103, ou bien au niveau de la surface 110. Dans ce dernier cas, la sortie est directe ou avec cheminement du fil soit le long d'une saignée 106 ménagée dans la face supérieure 103, soit le long d'une saignée 104 ménagée dans la face inférieure (104, 105).

L'orientation du dispositif 102 dans toutes les directions a alors lieu avec la paume de la main posée sur la face supérieure 103. Le méplat 104 définit une position de repos du dispositif 102 lorsqu'il est en contact avec un support horizontal, par exemple une table.

L'invention ne se limite pas aux modes de réalisations décrits ci-dessus. Ainsi dans chacun des modes de réalisations de l'élément mobile, on peut utiliser pratiquement d'autres détecteurs que ceux spécifiquement représentés. On peut ainsi associer à une pendule un contact opto-électronique ou bien magnétique, ou bien associer à une ampoule à mercure un contact opto-électronique. D'autre part, un dispositif selon l'invention peut comporter différents types de détecteurs et/ou différents types d'éléments mobiles. Enfin, même si le dispositif présente un méplat il peut le cas échéant être associé, au gré de l'utilisateur, avec différents types de supports assurant un rappel élastique.

## Revendications

1. Dispositif dénommé manette de jeu, pour commander le déplacement d'un point de référence sur un écran d'un jeu électronique, ledit dispositif comportant un boîtier contenant au moins un élément mobile (1, 11, 13, 20, 45, 48, 81) susceptible de coopérer avec au moins un détecteur (7 à 10, 7' à 10', 37, 38, 53, 59, 61 à 63, 82), caractérisé en ce que ledit boîtier comporte une paroi pourvue d'un méplat (95, 104) pour permettre la pose dudit boîtier sur un support dans une position de repos du dispositif, et en ce que ledit élément mobile et ledit détecteur sont réalisés de telle sorte qu'ils sont animés d'un mouvement relatif sous l'action de la gravité lors d'une modification de l'orientation du boîtier dans au moins un plan donné, et/ou d'un mouvement relatif par inertie lors du déplacement du boîtier dans au moins un plan donné.

2. Dispositif selon la revendication 1, caractérisé en ce que l'élément mobile est un pendule (1, 11, 13).

3. Dispositif selon la revendication 2, caractérisé en ce que les détecteurs (7 à 10, 7' à 10') sont au moins au nombre de quatre et en ce que leur disposition est telle que le pendule est susceptible lors de ces déplacements d'influer sur plus d'un détecteur (7 à 10, 7' à 10').

4. Dispositif selon la revendication 1, caractérisé en ce qu'un élément mobile est constitué par un objet (20, 45, 47, 48) se déplaçant par roulement entre une position de repos et au moins une position où il influe sur au moins un détecteur.

5. Dispositif selon la revendication 4, caractérisé en ce qu'il comporte une bille (20) pouvant se déplacer dans au moins une rainure (21 à 24, 51 à 54, 58, 60) inclinée, la position de repos étant constituée par un méplat (33) ou une butée (55).

6. Dispositif selon la revendication 4, caractérisé en ce qu'il comporte une bille (20) pouvant se déplacer sur un tronc de cône (34), la position de repos étant constituée par un méplat (33) disposé du côté du sommet du cône ou par une entrée (55).

7. Dispositif selon la revendication 1, caractérisé en ce qu'un élément mobile est constitué par un liquide (81).

8. Dispositif selon la revendication 7, caractérisé en ce qu'un élément mobile est constitué par le mercure (81) d'une ampoule à mercure (80).

9. Dispositif selon la revendication 8, caractérisé en ce que ladite ampoule à mercure (80) est inclinée d'un angle donné lorsque le dispositif est dans une position dite de repos.

10. Dispositif selon l'une des revendications précédentes, caractérisé en ce qu'il comporte une pluralité de détecteurs superposés associés chacun à un élément mobile correspondant chacun à la détection d'une direction d'inclinaison.

11. Dispositif selon l'une des revendications précédentes, caractérisé en ce qu'au moins un détecteur (7 à 10, 37, 38, 57, 82) est un contact électrique bi-lame.

12. Dispositif selon l'une des revendications 2 à 6, caractérisé en ce qu'au moins un détecteur (7' à 10') est un contact électrique simple, et en ce que l'élément mobile est conducteur et se trouve en contact avec un élément conducteur au moins lorsqu'il est lui-même en contact avec ledit contact électrique simple.

13. Dispositif selon l'une des revendications 1 à 10, caractérisé en ce qu'au moins un détecteur (61) est un contact magnétique.

14. Dispositif selon l'une des revendications 1 à 10, caractérisé en ce qu'au moins un détecteur (62, 63) est un interrupteur opto-électronique.

15. Dispositif selon la revendication 1, caractérisé en ce qu'il comporte une face inférieure pourvue d'un méplat central (104) entouré d'une portion arrondie (105) et d'une face supérieure (103) également de forme générale arrondie, de manière à définir un dispositif de forme générale aplatie.

16. Dispositif selon l'une des revendications 1 à 14, caractérisé en ce qu'il est de forme générale cylindrique et présente au moins une de ses faces supérieure (94) et inférieure (94') inclinée rapport au plan normal aux génératrices du cylindre.

17. Dispositif selon l'une des revendications précédentes, caractérisé en ce qu'il est associé à un support (99, 100) coopérant avec la partie inférieure dudit dispositif, et assurant un rappel élastique vers une position de repos.

18. Dispositif selon la revendication 17, caractérisé en ce que ledit support (99, 100) est une rotule rappelée vers une position de repos, une ventouse (100) ou bien comporte un replis élastique (98) coopérant avec la porte inférieure du dispositif.

## Patentansprüche

1. Vorrichtung mit Steuerhebel zur Bewegung eines Referenzpunktes auf dem Bildschirm eines elektronischen Spiels, wobei die Vorrichtung ein Gehäuse umfasst, welches wenigstens ein bewegliches Element (1, 11, 13, 20, 45, 48, 81) enthält, das zusammenwirken kann mit wenigstens einem Detektor (7 bis 10, 7' bis 10', 37, 38, 53, 59, 61 bis 63, 82), dadurch gekennzeichnet, dass das genannte Gehäuse eine Wandung umfasst, die mit einer Abflachung (95, 104) versehen ist, um das Aufsetzen des genannten Gehäuses auf einem Träger in einer Ruhestellung der Vorrichtung zu gestatten, und dass das genannte bewegliche Element sowie der genannte Detektor derart ausgebildet sind, dass sie eine Relativbewegung unter der Einwirkung der Schwerkraft bei einer Veränderung der Orientierung des Gehäuses in wenigstens einer gegebenen Ebene ausführen und/oder eine Relativbewegung durch Massenträgheit während der Bewegung des Gehäuses in wenigstens einer gegebenen Ebene ausführen.

2. Vorrichtung nach Anspruch 1, dadurch gekennzeichnet, dass das bewegliche Element ein Pendel (1, 11, 13) ist.

3. Vorrichtung nach Anspruch 2, dadurch gekennzeichnet, dass die Detektoren (7 bis 10, 7' bis 10') wenigstens vier an der Zahl sind und dass ihre Anordnung derart ist, dass das Pendel bei seinen Bewegungen mehr als einen Detektor (7 bis 10, 7' bis 10') beeinflussen kann.

4. Vorrichtung nach Anspruch 1, dadurch gekennzeichnet, dass ein bewegliches Element durch ein Objekt (20, 45, 47, 48) gebildet ist, welches sich durch Rollbewegung zwischen einer Ruhestellung und wenigstens einer Stellung bewegt, in welcher es auf wenigstens einen Detektor Einfluss ausübt.

5. Vorrichtung nach Anspruch 4, dadurch gekennzeichnet, dass sie eine Kugel (20) umfasst, die sich in wenigstens einer geneigten Rille (21 bis 24, 51 bis 54, 58, 60) bewegen kann, wobei die Ruhestellung durch eine Abflachung (33) oder einen Anschlag (55) gebildet ist.

6. Vorrichtung nach Anspruch 4, dadurch gekennzeichnet, dass sie eine Kugel (20) enthält, welche sich auf einem Kegelstumpf (34) bewegen kann, wobei die Ruhestellung durch eine Abflachung (33) erhalten ist, die auf der Seite des Scheitels des Kegels liegt, oder durch einen Einlass (55) gebildet ist.

7. Vorrichtung nach Anspruch 1, dadurch gekennzeichnet, dass ein bewegliches Element durch eine Flüssigkeit (81) gebildet ist.

8. Vorrichtung nach Anspruch 7, dadurch gekennzeichnet, dass das bewegliche Element durch Quecksilber (81) einer Quecksilberampulle (80) gebildet ist.

9. Vorrichtung nach Anspruch 8, dadurch gekennzeichnet, dass die genannte Quecksilberampulle (80) um einen gegebenen Winkel geneigt wird, wenn die Vorrichtung sich in der sogenannten Ruhestellung befindet.

10. Vorrichtung nach einem der vorstehenden Ansprüche, dadurch gekennzeichnet, dass sie eine Mehrzahl von übereinander angeordneten Detektoren umfasst, die jeweils einem beweglichen Element zugeordnet sind, welches jeweils der Erfassung einer Neigungsrichtung entspricht.

11. Vorrichtung nach einem der vorstehenden Ansprüche, dadurch gekennzeichnet, dass wenigstens ein Detektor (7 bis 10, 37, 38, 57, 82) ein elektrischer Doppellamellen-Kontakt ist.

12. Vorrichtung nach einem der Ansprüche 2 bis 6, dadurch gekennzeichnet, dass wenigstens ein Detektor (7' bis 10') ein einfacher elektrischer Kontakt ist und dass das bewegliche Element ein Leiter ist und sich in Berührung mit einem Leiterelement wenigstens dann befindet, wenn es selbst in Berührung mit dem genannten einfachen elektrischen Kontakt ist.

13. Vorrichtung nach einem der Ansprüche 1 bis 10, dadurch gekennzeichnet, dass wenigstens ein Detektor (61) ein Magnetkontakt ist.

14. Vorrichtung nach einem der Ansprüche 1 bis 10, dadurch gekennzeichnet, dass wenigstens ein Detektor (62, 63) ein optoelektronischer Unterbrecher ist.

15. Vorrichtung nach Anspruch 1, dadurch gekennzeichnet, dass sie eine Unterseite umfasst, welche mit einer zentralen Abflachung (104) versehen ist, die von einem abgerundeten Teil (105) umgeben ist, und eine Oberseite (103) aufweist, die ebenfalls von allgemein abgerundeter Gestalt ist, so dass eine Vorrichtung von allgemein abgeflachter Form gebildet ist.

16. Vorrichtung nach einem der Ansprüche 1 bis 14, dadurch gekennzeichnet, dass sie allgemein zylindrisch geformt ist, mit einer Oberseite (94) und einer Unterseite (94'), von denen wenigstens eine in bezug auf die zu den Mantellinien des Zylinders senkrechte Ebene geneigt ist.

17. Vorrichtung nach einem der vorstehenden Ansprüche, dadurch gekennzeichnet, dass sie einem Träger (99, 100) zugeordnet ist, welcher mit dem unteren Teil der genannten Vorrichtung zusammenwirkt und eine elastische Rückführung in eine Ruhestellung gewährleistet.

18. Vorrichtung nach Anspruch 17, dadurch gekennzeichnet, dass der genannte Träger (99, 100) ein Gelenkkpof ist, welcher in eine Ruhestellung zurückgebracht wird, ein Saugnapf (100) ist oder aber eine elastische Biegung (98) umfasst, welche mit der unteren Tür der Vorrichtung zusammenwirkt.

**Claims**

1. Device including a lever for controlling the movement of a reference point across a screen of an electronic game, said device comprising a housing containing at least one movable element (1, 11, 13, 20, 45, 48, 81) susceptible to cooperate with at least one detector (7 to 10, 7' to 10', 37, 38, 53, 59, 61 to 63, 82), characterized in that said housing comprises a wall provided with a flat (95, 104) to permit the housing to be put onto a carrier in a home position of the device, and in that said movable element and said detector are formed in such a manner that they perform a relative movement under the action of gravity upon a modification of the orientation of the housing within a given plane and/or a relative movement by inertia upon movement of the housing within at least one given plane.

2. Device according to claim 1, characterized in that the movable element is a pendulum (1, 11, 13).

3. Device according to claim 2, characterized in that at least four detectors (7 to 10, 7' to 10') are provided and in that their arrangement is such that the pendulum is susceptible to affect by its movement more than one detector (7 to 10, 7' to 10').

4. Device according to claim 1, characterized in that a movable element is formed by an object (20, 45, 47, 48) moving by rolling between a home position and at least one position where it affects at least one detector.

5. Device according to claim 4, characterized in that it comprises a wall (20) capable of moving within at least one inclined groove (21 to 24, 51 to 54, 58, 60), the home position being formed by a flat (33) or an abutment (55).

6. Device according to claim 4, characterized in that it comprises a ball (20) capable of moving on a truncated cone (34), the home position being formed by a flat (33) located on the side of the top of the cone or by an entrance (55).

7. Device according to claim 1, characterized in that a movable element is formed by a liquid (81).

8. Device according to claim 7, characterized in that a movable element is formed by mercury (81) within a mercury ampulla (80).

9. Device according to claim 8, characterized in that said mercury ampulla (80) is inclined by a given angle when the device is in said home position.

10. Device according to any of the preceding claims, characterized in that it comprises a plurality of super-imposed detectors each of which is associated with a movable element corresponding each to the detecting of one direction of inclination.

11. Device according to any of the preceding claims, characterized in that at least one detector (7 to 10, 37, 38, 57, 82) is an electric double reed contact.

12. Device according to any of claims 2 to 6, characterized in that at least one detector (7' to 10') is a single electric contact and in that the movable element is a conductor contacting a conductive element at least when it contacts said single electric contact.

13. Device according to any of claims 1 to 10, characterized in that at least one detector (61) is a magnetic contact.

14. Device according to any of claims 1 to 10, characterized in that at least one detector (62, 63) is an optoelectronic interrupter.

15. Device according to claim 1, characterized in that it comprises a lower face provided with a central flat (104) surrounded by a rounded portion (105) and an upper face (103) likewise of generally rounded shape, in a manner to define a device of generally flat shape.

16. Device according to any of claims 1 to 14, characterized in that it is of generally cylindrical shape and has at least one of its upper (94) and lower (94') faces inclined with respect to the plane normal to the generatrices of the cylinder.

17. Device according to any of the preceding claims, characterized in that it is associated with a carrier (99, 100) cooperating with the lower portion of said device, and ensuring a resilient return towards a home position.

18. Device according to claim 17, characterized in that said carrier (99, 100) is a ball biased towards a home position, a sucker (100) or comprising a resilient fold (98) cooperating with the lower door of the device.

0 074 289

Fig.1a
Fig.1b
Fig.1c
Fig.1d
Fig.2 a
Fig.2 b
Fig.3

9

Fig.4

Fig.5 b

Fig.5 a

Fig.6

Fig.7

Fig.8

Fig.9

Fig. 10

Fig. 11

Fig. 12

Fig. 13

**Fig. 15a**

**Fig. 14**

**Fig. 15 b**

**Fig. 15 c**

**Fig. 15 d**

**Fig. 16 a**

**Fig. 16 b**

Fig. 17 a

Fig. 17 b

Fig. 18 a

Fig. 18 b

Fig. 19

Fig. 20